Europäisches Patentamt

European Patent Office

Office européen des brevets

(11) Numéro de publication: **0 148 801**
**B1**

# FASCICULE DE BREVET EUROPÉEN

(45) Date de publication du fascicule du brevet:
**08.06.88**

(21) Numéro de dépôt: **85400030.4**

(22) Date de dépôt: **08.01.85**

(51) Int. Cl.⁴: **G 01 P 3/68**

(54) **Capteur de vitesse à deux faisceaux et à moyen de réglage.**

(30) Priorité: **10.01.84 FR 8400292**

(43) Date de publication de la demande:
**17.07.85 Bulletin 85/29**

(45) Mention de la délivrance du brevet:
**08.06.88 Bulletin 88/23**

(84) Etats contractants désignés:
**AT BE CH DE GB IT LI LU NL SE**

(56) Documents cité:
**US-A-3 567 951**
**US-A-4 239 962**

(73) Titulaire: **JEULIN, Société dite:, 28 rue Lavoisier Zone Industrielle no. 2, F-27031 Evreux (FR)**

(72) Inventeur: **Mobailly, Alain, Les Charmilles Rue de la Libération, F-27000 Evreux (FR)**
Inventeur: **Carre, Daniel, 34, route d'Evreux, F-27930 La Bonneville- sur- Iton (FR)**

(74) Mandataire: **Chevallier, Robert Marie Georges, Cabinet BOETTCHER 23, rue La Boétie, F-75008 Paris (FR)**

## Description

L'invention a pour objet un capteur servant à mesurer la vitesse instantanée d'un corps mobile.

Un capteur conforme à l'invention comprend deux supports disposés en regard l'un de l'autre et portant chacun respectivement d'une part deux émetteurs de faisceau lumineux et d'autre part deux récepteurs électroniques sensibles à ce faisceau lumineux; les deux faisceaux lumineux sont parallèles et espacés de 10 mm environ dans le sens du déplacement du corps mobile dont on veut mesurer la vitesse. Ce corps coupe alors un premier faisceau puis le deuxième faisceau; chaque coupure se traduit par l'émission d'un signal qui est envoyé à un calculateur à horloge qui calcule la vitesse du corps mobile pendant son passage entre les deux faisceaux.

Si $t_1$ et $t_2$ sont les instants de la coupure du premier et du second faisceau, la durée du déplacement entre les deux faisceaux est $t_2$ -$t_1$. La distance e qui sépare les faisceaux étant connue, la vitesse moyenne du mouvement entre les deux faisceaux est $V = \frac{e}{t_2 - t_1}$.

Si l'accélération est peu variable entre les deux faisceaux, on peut admettre que V est la vitesse instantanée à l'instant du passage au point central équidistant des deux faisceaux.

Il s'agit là d'une approximation à laquelle on ne pourrait remédier qu'en rapprochant davantage les deux émetteurs l'un de l'autre ainsi que les deux récepteurs; ce rapprochement est limité par des nécessités matérielles.

Il est donc souhaitable d'éliminer toute autre cause d'erreur sur laquelle on peut agir. Or, il en est une qui découle de ce que les récepteurs ne réagissent pas identiquement quand ils sont occultés par le passage d'un corps mobile.

Quand un récepteur a une surface sensible S en état de fonctionnement, il change d'état lorsqu'une fraction F de cette surface est occultée ne laissant plus alors qu'une surface résiduelle s encore exposée au faisceau. Les valeurs de F et de s sont différentes d'un récepteur à l'autre.

Le document USA-A 239 962 décrit un capteur de vitesse d'un projectile dans lequel deux photodétecteurs sont montés l'un derrière l'autre le long de la trajectoire de ce projectile. Ces photodétecteurs font partie de circuits électroniques dont la constitution n'est pas mentionnée; pour pouvoir être utilisé à la lumière du jour ce capteur comprend des écrans à configuration en U qui protègent les photodétecteurs contre l'éclairage direct par le soleil et qui créent un fond translucide sur lequel le projectile se détache mieux dans la zone surveillée par chaque photodétecteur.

Un autre document US-A-3 567 951 décrit un capteur du même genre, sans écran de protection, dans lequel chaque photodétecteur est une diode qui fait partie d'un circuit électronique comprenant une résistance réglable; cette dernière sert à régler individuellement la valeur de la tension de polarisation de la diode qui lui correspond.

Dans un capteur de vitesse comprenant deux supports disposés en regard l'un l'autre, dans lesquels un support porte deux émetteurs de faisceaux lumineux parallèles espacés d'une distance (e), l'autre support porte deux récepteurs desdits faisceaux lumineux, ces récepteurs faisant partie respectivement d'un circuit électronique et émettant chacun un signal à une certaine valeur d'occultation de leur surface, lesdits signaux étant transmis ensuite à un calculateur à horloge; selon l'invention les circuits des récepteurs de faisceaux lumineux sont réunis à un circuit correcteur de réglage permettant de faire varier la sensibilité à l'occultation desdits récepteurs, ce circuit correcteur de réglage agissant simultanément et en sens opposés sur l'un et sur l'autre récepteur.

De préférence, les émetteurs sont des diodes électroluminescentes et les récepteurs sont des phototransistors; le circuit correcteur de réglage comprend un potentiomètre dont une première fraction est associée à un premier phototransistor et une seconde fraction au second phototransistor.

En outre, selon une caractéristique supplémentaire de l'invention, on utilise des faisceaux lumineux à section droite rectangulaire dont la plus petite dimension est disposée dans le sens du déplacement du corps mobile.

On donnera maintenant, sans intention limitative et sans exclure aucune variante, une description d'un mode préféré de réalisation de l'invention. On se reportera au dessin annexé dans lequel:

- la figure 1 est une vue générale en perspective d'un capteur de vitesse conforme à l'invention ,
- la figure 2 est un schéma du circuit électrique de ce capteur,
- la figure 3 est une vue de détail agrandie montrant la section droite des faisceaux utilisés dans le capteur de l'invention.

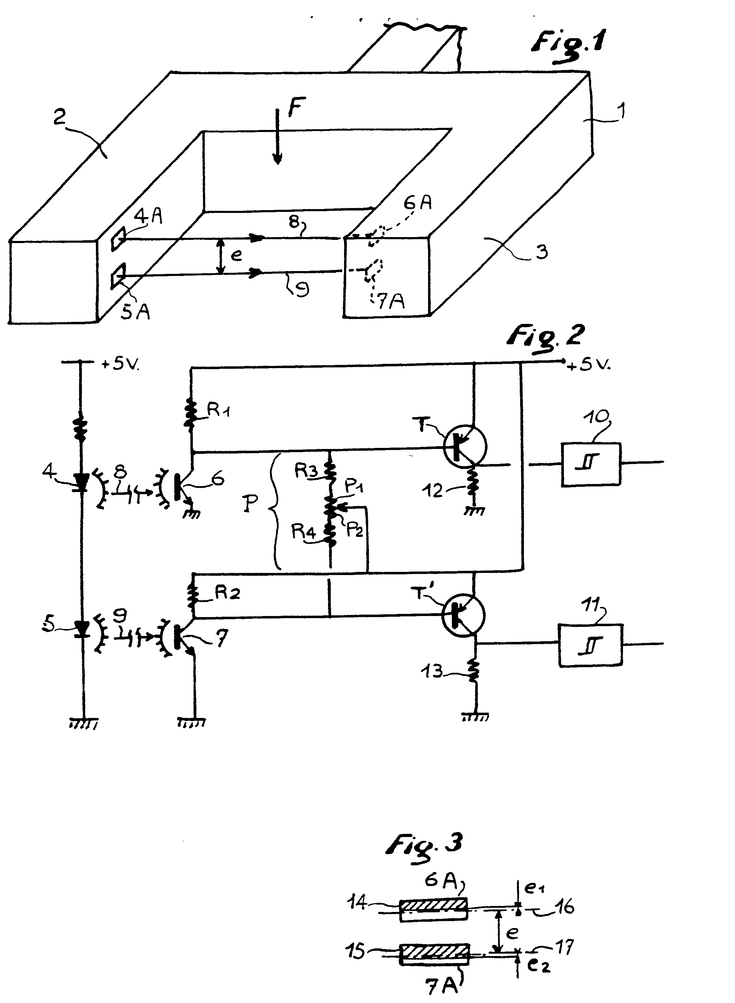

Un capteur de vitesse conforme à l'invention comprend un support 1 conformé avantageusement comme une fourche ayant deux branches 2, 3, parallèles, espacées, dont la branche 2 contient deux diodes électroluminescentes 4, 5 (figure 2) disposées chacune respectivement en face d'une ouverture correspondante 4A, 5A qui sera décrite en détail plus loin. Ces diodes 4, 5 et ces ouvertures 4A, 5A sont espacées d'une distance e égale à 10 mm par exemple dans un plan perpendiculaire au plan des branches 2, 3 et substantiellement parallèle au sens de déplacement du corps mobile dont on veut mesurer la vitesse. La branche 3 contient deux phototransistors 6, 7 en arrière de deux ouvertures 6A, 7A, en correspondance chacune respectivement avec les diodes 4, 5 et les ouvertures 4A, 5A. Ainsi deux faisceaux lumineux parallèles 8, 9, espacés de la distance e = 10 mm, vont dans un plan perpendiculaire au plan des branches 2, 3, de la face interne de la branche 2 à la face interne de la branche 3.

Tout corps mobile qui circule entre les branches 2, 3, perpendiculairement à leur plan dans le sens indiqué par une flèche F ou en sens inverse, coupe successivement les deux faisceaux 8, 9.

Chaque phototransistor 6, 7 a son émetteur relié à la masse et son collecteur relié à une borne +5V à travers une résistance $R_1$, $R_2$ de même valeur. Un point intermédiaire entre chaque résistance $R_1$ ou $R_2$ et le phototransistor 6, 7 est relié à la base d'un transistor amplificateur T, T' respectivement, dont l'émetteur est relié à la borne +5V et dont le collecteur est relié d'une part à une bascule 10, 11, d'autre part à la masse à travers une résistance de charge 12, 13. Les deux bascules 10, 11 sont reliées ensuite à un calculateur à horloge (non représenté).

Un ensemble résistant comprenant une résistance $R_3$, un potentiomètre P, une résistance $R_4$, en série, est monté en dérivation par une première partie comprenant la résistance $R_3$ et une fraction $P_1$ du potentiomètre P par rapport à la résistance $R_1$ du phototransistor 6 et par une seconde partie comprenant la résistance $R_4$ et une fraction $P_2$ complémentaire du potentiomètre P par rapport à la résistance $R_2$ du phototransistor 7.

Plus exactement, l'extrémité libre de la résistance $R_3$ est reliée au collecteur du phototransistor 6, c'est-à-dire à une borne de la résistance $R_1$, l'extrémité libre de la résistance $R_4$ est reliée au collecteur du phototransistor 7, c'est-à-dire à une borne de la résistance $R_2$ et l'organe mobile du potentiomètre P est relié à la fois à l'autre borne de la résistance $R_1$ et de la résistance $R_2$.

Ainsi, la résistance de charge du phototransistor 6 a pour valeur: $\frac{R_1 + R_3 + P_1}{R_1 (R_3 + P_1)}$

tandis que la résistance de charge du phototransistor 7 a pour valeur: $\frac{R_2 + R_4 + P_2}{R_2 (R_4 + P_2)}$.

En déplaçant l'organe mobile du potentiomètre P, on augmente $P_1$ en même temps que l'on diminue $P_2$, ou inversement, de sorte que l'on fait varier simultanément et dans des sens opposés la charge et donc la sensibilité des phototransistors 6, 7.

Ainsi on peut faire en sorte que les deux phototransistors 6, 7 émettent un signal d'occultation à des instants qui correspondent à une distance exacte e parcourue par un corps mobile coupant les faisceaux 8, 9.

La figure 3 montre que l'on donne avantageusement aux faisceaux 8, 9 reçus par les récepteurs, par exemple à l'aide des ouvertures 4A, 5A et 6A, 7A, une section droite rectangulaire dont le petit côté, 14, 15 respectivement, est disposé dans le sens F du déplacement du corps mobile entre les branches 2, 3 du capteur. Chaque ouverture rectangulaire 4A, 5A et 6A, 7A a un axe géométrique 16, 17 parallèle à ses grands côtés. Ces axes 16,17 sont parallèles et espacés d'une distance e. Mais comme les deux phototransistors 6, 7 ne fonctionnent pas identiquement, le phototransistor 6 peut émettre un signal quand la surface occultée est légèrement inférieure à la moitié de sa surface totale, c'est-à-dire à une distance $e_1$ avant que l'occultation atteigne son axe géométrique 16, tandis que le phototransistor 7 peut émettre un signal quand la surface occultée est légèrement supérieure à la moitié de sa surface totale, c'est-à-dire à une distance $e_2$ après que l'occultation a dépassé son axe géométrique 17. Ainsi, la distance parcourue par les deux signaux d'occultation n'est pas égale à e mais à $e_1 + e + e_2$.

On notera que la section droite rectangulaire, disposée comme on l'a dit, de chaque faisceau 8, 9 a pour effet de minimiser les valeurs de $e_1$ et de $e_2$ pour une valeur donnée de la surface d'occultation.

Le moyen de réglage décrit plus haut en référence à la figure 2 permet de corriger l'écart total $e_1 + e_2$; en agissant sur le potentiomètre P, on modifie en sens inverse les écarts individuels $e_1$ et $e_2$ et on parvient à ramener à la valeur e la distance parcourue par un corps mobile entre les branches 2, 3, entre les deux instants d'occultation. On effectue ce réglage en faisant se déplacer entre les branches 2, 3 un corps, par exemple un disque échancré, dont la vitesse est constante et contrôlée par ailleurs.

## Revendications

1. Capteur de vitesse comprenant deux supports (2, 3) disposés en regard l'un de l'autre, dans lesquels un support (2) porte deux émetteurs (4, 5) de faisceaux lumineux (8, 9) parallèles espacés d'une distance (e), l'autre support (3) porte deux récepteurs (6, 7) desdits faisceaux lumineux, ces récepteurs (6, 7) faisant partie respectivement d'un circuit électronique et émettant chacun un signal à une ertaine valeur d'occultation de leur surface, lesdits signaux étant transmis ensuite à un calculateur à horloge, caractérisé en ce que les circuits des récepteurs (6, 7) de faisceaux lumineux (8, 9) sont réunis à un circuit correcteur de réglage ($R_3$, P, $R_4$) permettant de faire varier la sensibilité à l'occultation desdits récepteurs (6, 7), ce circuit correcteur de réglage agissant simultanément et en sens opposés sur l'un et sur l'autre récepteur (6, 7).

2. Capteur selon la revendication 1 caractérisé en ce que les récepteurs (6, 7) sont des phototransistors ayant chacun une résistance de charge ($R_1$, $R_2$) respective et le circuit correcteur de réglage comprend un potentiomètre (P) monté par une première fraction réglable en dérivation par rapport à la résistance de charge ($R_1$) d'un phototransistor récepteur (6) et par une seconde fraction complémentaire réglable ($P_2$) en dérivation par rapport à la résistance de charge ($R_2$) de l'autre phototransistor (7).

3. Capteur selon la revendication 1 caractérisé en ce que les faisceaux lumineux (8, 9) reçus par les récepteurs (6, 7) ont une section droite rectangulaire dont les petits côtés (14, 15) sont disposés substantiellement en parallèle à la direction (F) de déplacement d'un corps mobile dont la vitesse est à mesurer.

**Patentansprüche**

1. Geschwindigkeitsgeber, mit zwei einander gegenüberliegenden Trägern (2, 3), von denen der eine Träger (2) zwei Emitter (4, 5) für in einem Abstand (e) angeordnete parallele Strahlenbündel (8, 9) und der andere Träger (3) zwei Empfänger (6, 7) für diese Strahlenbündel trägt, wobei die Empfänger (6, 7) jeweils Teil eines elektronischen Schaltkreises bilden und von denen jeder ein Signal bzgl. eines bestimmten Abdeckungswertes seiner Oberfläche abgibt, welche Signale einem Taktgeber-Rechner übertragen werden, <u>dadurch gekennzeichnet,</u> daß die Schaltkreise der Empfänger (6, 7) der Strahlenbündel (8, 9) mit einem Korrekturregelschaltkreis ($R_3$, P, $R_4$) verbunden sind, mit dem die Empfindlichkeit bezüglich der Abdeckung der Empfänger (6, 7) veränderbar ist, und wobei der Korrekturregelschaltkreis gleichzeitig und in entgegengesetztem Sinne auf den einen und den anderen Empfänger (6, 7) wirkt.

2. Geber nach Anspruch 1, dadurch gekennzeichnet, daß die Empfänger (6, 7) Fototransistoren sind, von denen jeder einen Lastwiderstand ($R_1$, $R_2$) besitzt, und daß der Korrekturregelschaltkreis ein Potentiometer (P) besitzt, das mit einem ersten Einstellabschnitt parallel zum Lastwiderstand ($R_1$,) eines Fototransistor-Empfängers (6) und mit einem zweiten komplementären Einstellteil parallel zum Lastwiderstand ($R_2$,) des anderen Fototransistors (7) angeordnet ist.

3. Geber nach Anspruch 1, dadurch gekennzeichnet, daß die von den Empfängern (6, 7) empfangenen Strahlenbündel (8, 9) einen länglich rechteckigen Querschnitt aufweisen, dessen kleine Seiten (14, 15) im wesentlichen parallel zur Richtung (F) der Bewegung eines beweglichen Körpers, dessen Geschwindigkeit zu messen ist, angeordnet sind.

**Claims**

A velocity sensor comprising two supports (2, 3) arranged facing one another, in which one support (2) carries two emitters (4, 5) of parallel beams (8, 9) of light separated by a distance (e) and the other support (3) carries two receivers (6, 7) of the said beams of light, these receivers (6, 7) forming part respectively of an electronic circuit and each emitting a signal at a certain value of occultation of its surface, the said signals being then transmitted to a clock calculator, characterized in that the circuits of the receivers (6, 7) of the beams (8, 9) of light are joined to a regulation corrector circuit ($R_3$, P, $R_4$) which enables the sensitivity to occultation of the the said receivers (6, 7) to be caused to vary, this regulation corrector circuit acting simultaneously and in opposite senses upon the two receivers (6, 7).

2. A sensor as in Claim 1, characterized in that the receivers (6, 7) are phototransistors each having a respective load resistor $R_1$, $R_2$) and the regulation corrector circuit comprises a potentiometer (P) connected by a first adjustable fraction in parallel with the load resistor ($R_1$) of one receiver phototransistor (6) and by a second complementary adjustable fraction ($P_2$) in parallel with the load resistor ($R_2$) of the other phototransistor (7).

3. A sensor as in Claim 1, characterized in that the beams (8, 9) of light received by the receivers (6, 7) have a rectangular cross-section the short sides (14, 15) of which are arranged substantially in parallel with the direction (F) of movement of a moving body the velocity of which is to be measured.

0 148 801

Fig.1

Fig. 2

Fig. 3

1